(19) Europäisches Patentamt
European Patent Office
Office européen des brevets

(11) EP 4 546 440 A1

(12) **EUROPEAN PATENT APPLICATION**
published in accordance with Art. 153(4) EPC

(43) Date of publication:
**30.04.2025 Bulletin 2025/18**

(21) Application number: 23850403.9

(22) Date of filing: 01.08.2023

(51) International Patent Classification (IPC):
*H01M 4/13* (2010.01)     *H01M 4/66* (2006.01)
*H01M 4/04* (2006.01)     *H01M 4/02* (2006.01)

(52) Cooperative Patent Classification (CPC):
H01M 4/02; H01M 4/04; H01M 4/13; H01M 4/66

(86) International application number:
**PCT/KR2023/011263**

(87) International publication number:
**WO 2024/029902 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 03.08.2022 KR 20220096886

(71) Applicant: **SK On Co., Ltd.**
**Seoul 03161 (KR)**

(72) Inventors:
• **KANG, Yong-Hee**
**Daejeon 34124 (KR)**
• **KANG, Byung-Chan**
**Daejeon 34124 (KR)**

(74) Representative: **Prüfer & Partner mbB**
**Patentanwälte · Rechtsanwälte**
**Sohnckestraße 12**
**81479 München (DE)**

(54) **SECONDARY BATTERY ELECTRODE AND MANUFACTURING METHOD THEREFOR**

(57)     The objective of the present invention is to provide a method for manufacturing a secondary battery electrode, and the secondary battery electrode manufactured thereby, which are capable of simultaneously suppressing an electrode breakage problem during rolling and a burning problem during assembly. According to the present invention, provided is the secondary battery electrode comprising an electrode current assembly, and an electrode mixture layer formed on at least one surface of the electrode current collector so that a part of the electrode current collector is exposed to form an un-coated part, wherein the tensile strength retention of the uncoated part according to formula 1 is 0.75 or greater. [Formula 1] $R_{TS} = TS_{NC} / TS_{ML}$, wherein, in formula 1, $R_{TS}$ is the tensile strength retention of the uncoated part, $TS_{NC}$ is the tensile strength of the uncoated part in an area that excludes area A, which is a partial area in the uncoated part set toward the electrode mixture layer from an end of the uncoated part, and $TS_{ML}$ is the tensile strength of the electrode current collector having the electrode mixture layer formed on at least one surface thereof.

FIG. 1

EP 4 546 440 A1

## Description

Technical Field

The present disclosure relates to an electrode for a secondary battery and a manufacturing method thereof.

Background Art

In a secondary battery manufacturing process, a rolling process is a process of allowing an electrode to pass through between two upper and lower main rolls, thereby reducing a thickness of the electrode and increasing energy density.

In general, before the rolling process, a coating process is performed in which an electrode slurry is applied to at least one surface of an electrode current collector, and here, the current collector has a region in which the slurry is not applied, a so-called uncoated portion.

In a subsequent rolling process of the electrode, a portion of the current collector in which a mixture layer is formed is elongated relatively widely, while the uncoated portion is not elongated because no pressure is applied thereto. Accordingly, a difference in elongation may occur between the mixture layer and the uncoated portion, and the uncoated portion may be deformed at a boundary between the mixture layer and the uncoated portion, and if the deformation becomes larger, a breakage may occur in which the electrode breaks.

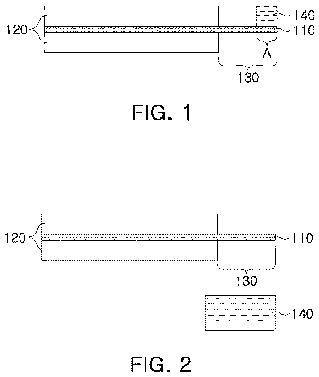

This causes a yield and operating rate in the rolling process to decrease, and to solve this problem, Korean Application Publication No. 10-2012-0126303 discloses that a heating unit, such as induction heating annealing (IHA); high-frequency induction heating device), is installed in front of a main roll unit of rolling equipment to heat the uncoated portion before the rolling process (see FIG. 2). When the uncoated portion is heated, tensile strength may be lowered, which may reduce the deformation of the uncoated portion and the electrode breakage problem that occurs at the boundary between the mixture layer and the uncoated portion.

However, heating the entire uncoated portion may cause a problem of sticking in which an ultrasonic heating mold and a portion of the uncoated portion stick together during welding in an assembly process, a subsequent process.

Therefore, it is necessary to develop a heating process that may solve the electrode breakage problem in the rolling process and the sticking problem in the assembly process.

Summary of Invention

Technical Problem

An aspect of the present disclosure is to provide a method for manufacturing an electrode for a secondary battery, capable of suppressing both the problem, such as electrode breakage in a rolling process, and the problem, such as sticking in the assembly process.

Solution to Problem

According to an aspect of the present disclosure, an electrode for a secondary battery includes: an electrode current collector; and an electrode mixture layer formed on at least one surface of the electrode current collector so that a portion of the electrode current collector is exposed to form an uncoated portion, wherein a retention rate of tensile strength of the uncoated portion, according to Equation 1 below, is 0.75 or greater,

$$[\text{Equation 1}]$$

$$R_{TS} = TS_{NC} / TS_{ML}$$

where $R_{TS}$ is a retention rate of tensile strength of the uncoated portion, $TS_{NC}$ is the tensile strength of the uncoated portion in a region excluding region A, a portion of the uncoated portion set in the direction from the end of the uncoated portion to the electrode mixture layer, and $TS_{ML}$ is the tensile strength of the electrode current collector having the electrode mixture layer formed on at least one surface thereof.

Region A may be a region from an end of the uncoated portion to a 1/2 to 1/3 point in the direction of the electrode mixture layer.

In the electrode for a secondary battery, $TS_{NC}$ according to Equation 1 is 18 to 28 kgf/mm$^2$.

In the electrode for a secondary battery, $TS_{ML}$ according to Equation 1 may be 20 to 30 kgf/mm$^2$.

The electrode may be an anode or a cathode.

The electrode current collector may be at least one selected from the group consisting of aluminum foil, copper foil, and nickel foil.

According to another aspect of the present disclosure, a method of manufacturing an electrode for a secondary battery includes: forming an electrode mixture layer by coating an electrode slurry to at least one surface of an electrode current collector so that a portion of the electrode current collector is exposed to form an uncoated portion; heating region A, a portion of the uncoated portion set in the direction from an end of the uncoated portion to the electrode mixture layer; and rolling the electrode mixture layer.

Region A may be a region from the end of the uncoated portion to a 1/2 to 1/3 point in the direction of the electrode mixture layer.

The heating may be performed by contacting region A with the heating unit.

The heating unit may have a contact portion formed of a ceramic material.

In the heating, region A, from the end of the uncoated portion, may be heated to 190°C to 230°C.

Advantageous Effects of Invention

According to an aspect of the present disclosure, a method for manufacturing an electrode for a secondary battery, capable of suppressing electrode breakage in the rolling process and suppressing sticking in the assembly process by locally heating the uncoated portion before the rolling process.

According to the method for manufacturing an electrode for a secondary battery, the yield and operating rate of the process may be improved.

Brief Description of Drawings

FIG. 1 is a schematic diagram illustrating a heating process according to an embodiment of the present disclosure.
FIG. 2 is a schematic diagram illustrating a heating process using a heating unit of the related art.

Best Mode for Invention

Hereinafter, an embodiment of the present disclosure will be described. However, the embodiment of the present disclosure may be modified to have various other forms, and the scope of the present disclosure is not limited to the embodiment described below.

The use of ternary nickel cobalt manganese (NCM) active materials has increased to manufacture high-capacity secondary batteries. These NCM active materials have a low pellet density compared to lithium cobalt oxide (LCO), making it difficult to increase the electrode density, while an anode camber caused by high contact pressure (force applied to an electrode per unit area) and the wrinkles and breakages caused by the deformation of the current collector may increase, which may significantly affect the product quality and productivity, and therefore, improvement is necessary.

The present disclosure provides a method for manufacturing an electrode for a secondary battery, which may suppress the occurrence of electrode breakage by improving a heating process before a rolling process and suppress the occurrence of sticking between an ultrasonic heating mold used for welding and an uncoated portion in an assembly process, a subsequent process.

According to an aspect of the present disclosure, a method for manufacturing an electrode for a secondary battery, includes an operation of forming an electrode mixture layer by coating an electrode slurry to at least one surface of an electrode current collector so that a portion of the electrode current collector is exposed to form an uncoated portion, an operation of heating region A, a portion of the uncoated portion set in the direction from an end of the uncoated portion to the electrode mixture layer; and an operation of rolling the electrode mixture layer.

Hereinafter, a method for manufacturing an electrode for a secondary battery according to the present disclosure will be described in detail.

Method for manufacturing an electrode for a secondary battery

Operation of forming electrode mixture layer

In order to manufacture an electrode for a secondary battery, an electrode slurry may first be applied to at least one surface of an electrode current collector and then dried to form an electrode mixture layer. Here, the electrode slurry may only be applied to a portion of the electrode current collector, and the other portion of the electrode current collector may be exposed to form an uncoated portion. It is preferable that the uncoated portion is formed at the end of the electrode current collector.

In the present disclosure, the electrode slurry includes an electrode active material, a binder, and a solvent, and may further include additives, such as a conductive agent and a thickener as needed. Different electrode active materials, binders, and solvents may be used depending on the type of electrode to be manufactured.

More specifically, a cathode active material may be a lithium transition metal oxide, for example, $LiCoO_2$, $LiMn_2O_4$, $LiNiO_2$, $LiMnO_2$ but is not limited thereto.

An anode active material may be, but is not limited to, a carbon-based material, such as crystalline carbon, such as natural graphite or artificial graphite in an amorphous, plate-like, flake-like, spherical or fibrous form, amorphous carbon, such as soft carbon or hard carbon, or combinations thereof.

The binder serves to attach cathode active material particles and also to attach the cathode active material to the electrode current collector and may be formed of, but is not limited to, polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinyl pyrrolidone, polyurethane, polytetrafluoroethylene, polyvinylidene fluoride, polyethylene, polypropylene, styrene-butadiene rubber, acrylated styrene-butadiene rubber, epoxy resin, nylon, and the like.

The conductive material is used to impart conductivity to the electrode, and any electronically conductive material that does not cause a chemical change when used in a battery may be used. For example, natural graphite, artificial graphite, carbon black, acetylene black, Ketjen black, carbon fiber, carbon nanotube, metal powder, such as copper, nickel, aluminum, silver, metal fiber, etc. may be used, and also, conductive materials, such as polyphenylene derivatives, may be used alone or in combination of one or more thereof, but are not limited thereto.

In the present disclosure, aluminum foil, copper foil, nickel foil, or combinations thereof may be used as the electrode current collector, but is not limited thereto.

The method of evenly coating the electrode slurry on the electrode current collector may be selected from known methods in consideration of the characteristics of the material, etc. or may be performed by a new appropriate method. For example, after distributing the electrode slurry on the electrode current collector, the electrode slurry may be uniformly dispersed using a doctor blade, etc. In some cases, a method of performing the distribution and dispersion processes as a single process may be used. In addition, methods, such as die casting, comma coating, gravure coating, and screen printing may be applied.

After coating, the electrode slurry may be dried to remove a solvent contained in the electrode slurry. Here, the number of drying times is not limited, and for example, the process of coating the electrode slurry and drying may be repeated several times, or the electrode slurry may be applied a plurality of times and then dried once. In addition, the drying may be performed in a vacuum oven at 50°C to 200°C for 12 to 72 hours.

Heating operation

After forming the electrode mixture layer, a portion of the uncoated portion may be heated to lower tensile strength of the electrode current collector. The heating operation of the present disclosure will be described in more detail below with reference to FIGS. 1 and 2.

FIG. 1 schematically illustrates a heating process in a method for manufacturing an electrode for a secondary battery according to one embodiment of the present disclosure.

FIG. 2 is a schematic diagram illustrating a heating process using a heating unit of the related art.

As described above, the uncoated portion may be heated to reduce an elongation difference between the current collector in the portion in which the mixture layer is formed and the uncoated portion, thereby suppressing problems, such as electrode breakage, in the rolling process, and improving the process yield and operating rate.

To this end, in the case of an induction heating annealing (IHA) process that has been mainly used in the related art, the tensile strength of the uncoated portion may be reduced by installing IHA equipment at a front end of a main roll unit of rolling equipment and heating the entire uncoated portion (see FIG. 2).

However, heating the entire uncoated portion in this manner may cause a sticking problem in which an ultrasonic heating mold and a portion of the uncoated portion stick together during welding in the assembly process, a subsequent process.

In this regard, increasing the output of the IHA equipment may reduce the occurrence of electrode breakage in the rolling process but causes problems, such as sticking in the assembly process. Meanwhile, decreasing the output of the IHA equipment may alleviate the sticking problem in the assembly process, but causes problems, such as electrode breakage in the rolling process.

Therefore, according to the existing process, there is a limitation that problems, such as electrode breakage in the rolling process, and problems, such as sticking in the assembly process, cannot be solved at the same time.

Meanwhile, according to an aspect of the present disclosure, by heating only a portion of the uncoated portion, instead of heating the entire portion as described above, problems, such as electrode breakage in the rolling process, and problems, such as sticking in the assembly process, may be suppressed at the same time.

That is, as illustrated in FIG. 1, a portion (region A) of the uncoated portion set in the direction from the end of the uncoated portion to the electrode mixture layer may be heated using a heating unit. Here, the portion of the uncoated portion set in the direction from the end of the uncoated portion to the electrode mixture layer refers to region A illustrated in FIG. 1.

Region A may be a region from the end of the uncoated portion to a 1/2 to 1/3 point in the direction of the electrode mixture layer.

The heating operation may be performed by contacting region A with the heating unit. Specifically, in the present disclosure, the heating process may be performed by directly bringing the region (region A) of the uncoated portion to be heated into contact with the heating unit via a contact portion. As such a heating unit, a ceramic heater in which the contact portion is a ceramic material, and preferably, the contact portion includes silicon nitride ($Si_3N_4$) and a conductive material, may be used. In addition to the heating unit described above, any unit capable of locally heating the uncoated portion is not particularly limited.

The heating operation may be performed by heating region A, from the end of the uncoated portion, to 190°C to 230°C. If the temperature is less than 190°C, the rate of decrease in the tensile strength of the uncoated portion is not significant, so it may be difficult to substantially alleviate problems, such as electrode breakage, in the rolling process. Meanwhile, if the temperature exceeds 230°C, the tensile strength of the uncoated portion may be excessively reduced, making it difficult to substantially alleviate problems, such as sticking, during the assembly process.

The tensile strength of the uncoated portion may be reduced by the heating process. Specifically, by heating a portion of the uncoated portion, not the entire uncoated portion, the tensile strength of the uncoated portion may be reduced, thereby alleviating problems, such as electrode breakage, during the rolling process, and preventing excessive reduction in the tensile strength of the uncoated portion adjacent to the mixture layer, thereby also alleviating problems, such as sticking, during the assembly process.

Rolling operation

After heating a portion of the uncoated portion, a rolling process may be performed using a rolling facility.

By rolling the electrode mixture layer, the density of the electrode mixture layer, adhesion to the electrode current collector, and homogeneity may be improved. The rolling process may be performed using, for example, a metal roll, an elastic roll, a heating roll, or a sheet press. In the present disclosure, the temperature during rolling may be room temperature or may be an increased temperature, as long as it is lower than the temperature at which the coating film of the active material layer is dried, but rolling may usually be performed at room temperature, for example, 15 to 35°C.

**Electrode for secondary battery**

According to an aspect of the present disclosure, an electrode for a secondary battery in which only a portion of the uncoated portion is heated so that the tensile strength of the uncoated portion of region Adjacent to the end of the uncoated portion is relatively significantly reduced compared to the tensile strength of the current collector of the portion in which the mixture layer is formed, and thus a value thereof is relatively low, while the tensile strength of the uncoated portion of region Adjacent to the mixture layer is relatively not significantly reduced compared to the tensile strength of the current collector of the portion in which the mixture layer is formed, and thus a value thereof is relatively high compared to the tensile strength of the region adjacent to the end of the uncoated portion.

The electrode for a secondary battery includes: an electrode current collector; and an electrode mixture layer formed on at least one surface of the electrode current collector so that a portion of the electrode current collector is exposed to form an uncoated portion, wherein a retention rate of the tensile strength of the uncoated portion, according to Equation 1 below, may be 0.75 or greater.

$$[Equation\ 1]$$

$$R_{TS} = TS_{NC}\ /\ TS_{ML}$$

In Equation 1, $R_{TS}$ is a retention rate of the tensile strength of the uncoated portion, $TS_{NC}$ is the tensile strength of the uncoated portion in a region excluding region A, a portion of the uncoated portion set in the direction of from the end of the uncoated portion to the electrode mixture layer, and $TS_{ML}$ is the tensile strength of the electrode current collector having the electrode mixture layer formed on at least one surface thereof.

Region A may be a region from the end of the uncoated portion to a 1/2 to 1/3 point in the direction of the electrode mixture layer. A detailed description of region A is the same as the description given above, and thus is omitted.

Specifically, the retention rate ($R_{TS}$) of the tensile strength of the uncoated portion may be 0.8 or more, 0.9 or more, 1 or less, or 0.95 or less.

The electrode for a secondary battery may have a $TS_{NC}$ of 18 to 28 kgf/mm$^2$ according to Equation 1 and a $TS_{ML}$ of 20 to 30 kgf/mm$^2$ according to Equation 1.

When the retention rate ($R_{TS}$) of the tensile strength of the uncoated portion and the tensile strength values ($TS_{NC}$ and $TS_{ML}$) of each region are as described above, the overall tensile strength of the uncoated portion may be prevented from being excessively reduced and may be reduced within an appropriate range, thereby alleviating problems, such as electrode breakage, during the rolling process, and substantially preventing problems, such as sticking, during the assembly process.

The electrode may be an anode or a cathode.

The electrode current collector may be at least one selected from the group consisting of aluminum foil, copper foil, and nickel foil, but is not limited thereto.

The electrode for a secondary battery may be manufactured by the method for manufacturing an electrode for a secondary battery described above.

[Mode for invention]

**Example**

Hereinafter, Examples of the present disclosure will be described in detail. The following examples are provided only for understanding the present disclosure and do not limit the present disclosure.

Manufacturing of cathode mixture layer

95 parts by weight of NCM-based cathode active material particles, 2.0 parts by weight of carbon black conductive material, 1.0 parts by weight of graphite-based conductive material, 2.0 parts by weight of PVDF binder, and N-methyl-2-pyrrolidone (NMP) as a solvent were mixed to prepare a cathode slurry. The slurry was applied so that the mass per area was 20 mg/cm$^2$ except for a point of 15 mm from the end of a 12 $\mu$m-thick aluminum foil. Then, the resultant structure was allowed to pass through a hot air drying oven at 120°C to form an electrode mixture layer.

Examples 1-3

A ceramic heater was brought into contact with a cathode mixture layer having a 15-mm uncoated portion at the end, manufactured as described above, and only a portion of the uncoated portion was heated under the conditions described in Table 1 (see FIG. 1), and then rolled using a roll press rolling facility. The number of breakages during the rolling process and the number of welding sticking occurring in a subsequent battery cell assembly process were measured for a cathode finally manufactured and are listed in Table 2.

Comparative Example 1

A region including the entire uncoated portion of a cathode mixture layer having a 15-mm uncoated portion at the end, manufactured as described above, was heated using induction heating annealing (IHA) under the conditions described in Table 1, and then rolled using a roll press rolling facility. The number of breakages during the rolling process and the number of welding sticking occurring in the subsequent battery cell assembly process were measured for a cathode finally manufactured and are listed in Table 2.

Comparative Examples 2 and 3

A ceramic heater was brought into contact with a cathode mixture layer having a 15-mm uncoated portion at the end, manufactured above, and only a portion of the uncoated portion was heated under the conditions described in Table 1 (see FIG. 1), and then rolled using roll press rolling facility. The number of breakages during the rolling process and the number of welding sticking occurring in the subsequent battery cell assembly process were measured for a cathode finally manufactured and are listed in Table 2.

[Table 1]

| Classific ation | *Heated region | Heating unit | Heating temperature (°C) |
|---|---|---|---|
| Comparati ve Example 1 | Portion of mixture layer + entire uncoated portion | IHA | 220 |
| Comparati ve Example 2 | End of uncoated portion to point of 1/3 | Ceramic heater | 180 |
| Comparati ve Example 3 | End of uncoated portion to point of 1/3 | Ceramic heater | 250 |
| Example 1 | End of uncoated portion to point of 1/3 | Ceramic heater | 190 |
| Example 2 | End of uncoated portion to point of 1/3 | Ceramic heater | 230 |
| Example 3 | End of uncoated portion to point of 1/3 | Ceramic heater | 215 |

[0085] * A position of a surface (boundary) in which the current collector and the mixture layer were in contact in the total length of 15 mm of the uncoated portion was identified as 0 and a position (the end of the uncoated portion) of the collector farthest from the mixture layer was identified as 15. In Comparative Examples 2 and 3 and Examples 1 and 2, a section from 15 to 10 (the end of the uncoated portion to point of 1/3) was set as region A and heated, and in Example 3, a section from 15 to 7.5 (point of 1/2 in the direction of the end of the uncoated portion) was set as region A and heated.

[Table 2]

| Classification | Number of breakages (times) | Number of welding sticking (times) |
|---|---|---|
| Comparative Example 1 | 0 | 6 |
| Comparative Example 2 | 4 | 4 |
| Comparative Example 3 | 0 | 9 |
| Example 1 | 1 | 0 |
| Example 2 | 1 | 1 |
| Example 3 | 1 | 1 |

Measurement of tensile strength of uncoated portion

The tensile strength of the uncoated portion of each electrode was measured by region using a universal testing machine (UTM) measuring device. Specifically, the uncoated portion of the manufactured electrode was cut to obtain a 15-mm sample, and upper and lower portions of the sample were fixed to the UTM measuring device. A load and gauge distance were reset, and the tensile strength was measured using a computer-linked program (Bullhill) and listed in Table 3.

In addition, the retention rate of tensile strength of the uncoated portion, according to Equation 1 below, was calculated through each measured tensile strength value, and the results are listed in Table 3.

$$[\text{Equation 1}]$$

$$R_{TS} = TS_{NC} / TS_{ML}$$

In Equation 1 above, $R_{TS}$ is the retention rate of tensile strength of the uncoated portion, $TS_{NC}$ is the tensile strength of the uncoated portion in the region excluding region A, a portion of the uncoated portion set in the direction from the end of the uncoated portion to the electrode mixture layer, and $TS_{ML}$ is the tensile strength of the electrode current collector in which the electrode mixture layer is formed on at least one surface thereof.

[Table 3]

| Classific ation | * Tensile strength ($TS_{NC}$) of uncoated portion of region excluding region A (kgf/mm$^2$) | Tensile strength ($TS_{ML}$) of current collector in which mixture layer is formed (kgf/mm$^2$) | Retention rate of tensile strength of uncoated portion ($R_{TS}$) |
|---|---|---|---|
| Comparati ve Example 1 | 17 | 24 | 0.708 |
| Example 1 | 22 | 24 | 0.917 |
| Example 2 | 20 | 24 | 0.833 |
| Example 3 | 19 | 24 | 0.792 |

Referring to Tables 1 and 2 in which a position of a surface (boundary) in which the current collector and the mixture layer were in contact in the total length of 15 mm of the uncoated portion was identified as 0, a position (the end of the uncoated portion) of the collector farthest from the mixture layer was identified as 15, and a section from 0 to 10 (point of 2/3 to the end of the uncoated portion) was set as a region excluding region A, and the tensile strength ($TS_{MC}$) of the uncoated portion of the region excluding region A, a region relatively adjacent to the mixture layer in the uncoated portion was measured, in the case of Examples 1 to 3 satisfying all the heating conditions according to the present disclosure, it can be seen that the number of electrode breakages during the rolling process and the number of sticking occurrences during the assembly process are relatively lower than in Comparative Examples 1 to 3.

Referring to Tables 1 and 3, in the case of Examples 1 to 3 satisfying all the heating conditions according to the present disclosure, the tensile strength value of the region of the uncoated portion adjacent to the mixture layer was controlled to not be excessively low compared to the tensile strength of the current collector having the mixture layer formed on at least one surface thereof. Meanwhile, in the case of Comparative Example 1, in which the entire region of the uncoated portion was heated using the IHA equipment, the tensile strength of the region of the uncoated portion adjacent to the mixture layer was reduced to an excessively low level compared to the tensile strength of the current collector having the mixture layer formed on at least one surface thereof. Accordingly, the maintenance rate of tensile strength of the uncoated portion in Comparative Example 1 was calculated to be relatively low compared to Examples 1 to 3.

Considering the results, when the tensile strength of the uncoated portion is lowered to be within an appropriate range by heating only a portion of the region of the uncoated portion adjacent to the end as in Examples 1 to 3, problems, such as electrode breakage, during the rolling process and problems, such as sticking, during the assembly process may be considered to be simultaneously alleviated.

[DESCRIPTION OF REFERENCE NUMERALS]

110: electrode current collector
120: electrode mixture layer
130: uncoated portion
140: heating unit

[Industrial Applicability]

As described above, the features of the present disclosure may be applied to an electrode for a secondary battery and a manufacturing method thereof in whole or in part.

Claims

1. An electrode for a secondary battery, the electrode comprising:

an electrode current collector; and
an electrode mixture layer formed on at least one surface of the electrode current collector so that a portion of the electrode current collector is exposed to form an uncoated portion,
wherein a retention rate of tensile strength of the uncoated portion, according to Equation 1 below, is 0.75 or greater,

[Equation 1]

$$R_{TS} = TS_{NC} / TS_{ML}$$

where $R_{TS}$ is a retention rate of tensile strength of the uncoated portion, $TS_{NC}$ is the tensile strength of the uncoated portion in a region excluding region A, a portion of the uncoated portion set in the direction from the end of the uncoated portion to the electrode mixture layer, and $TS_{ML}$ is the tensile strength of the electrode current collector having the electrode mixture layer formed on at least one surface thereof.

2. The electrode of claim 1, wherein region A is a region from an end of the uncoated portion to a 1/2 to 1/3 point in the direction of the electrode mixture layer.

3. The electrode of claim 1, wherein $TS_{NC}$ according to Equation 1 is 18 to 28 kgf/mm$^2$.

4. The electrode of claim 1, wherein $TS_{ML}$ according to Equation 1 is 20 to 30 kgf/mm$^2$.

5. The electrode of claim 1, wherein the electrode is an anode or a cathode.

6. The electrode of claim 1, wherein the electrode current collector is at least one selected from the group consisting of aluminum foil, copper foil, and nickel foil.

7. A method of manufacturing an electrode for a secondary battery, the method comprising:

   forming an electrode mixture layer by coating an electrode slurry to at least one surface of an electrode current collector so that a portion of the electrode current collector is exposed to form an uncoated portion;
   heating region A, a portion of the uncoated portion set in the direction from an end of the uncoated portion to the electrode mixture layer; and
   rolling the electrode mixture layer.

8. The method of claim 7, wherein region A is a region from the end of the uncoated portion to a 1/2 to 1/3 point in the direction of the electrode mixture layer.

9. The method of claim 7, wherein the heating is performed by contacting region A with the heating unit.

10. The method of claim 9, wherein the heating unit has a contact portion formed of a ceramic material.

11. The method of claim 7, wherein, in the heating, region A, from the end of the uncoated portion, is heated to 190°C to 230°C.

FIG. 1

FIG. 2

## INTERNATIONAL SEARCH REPORT

International application No.

**PCT/KR2023/011263**

### A. CLASSIFICATION OF SUBJECT MATTER

**H01M 4/13**(2010.01)i; **H01M 4/66**(2006.01)i; **H01M 4/04**(2006.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/13(2010.01); H01M 4/02(2006.01); H01M 4/04(2006.01); H01M 4/66(2006.01); H01M 50/531(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극(electrode), 집전체(current collector), 무지부(non-coating part), 인장강도 (tensile strength), 압연(rolling), 이차전지(secondary battery)

### C. DOCUMENTS CONSIDERED TO BE RELEVANT

| Category* | Citation of document, with indication, where appropriate, of the relevant passages | Relevant to claim No. |
|---|---|---|
| X | KR 10-2021-0127011 A (SK INNOVATION CO., LTD.) 21 October 2021 (2021-10-21) See claims 1, 3, 4, 9 and 10, and paragraphs [0009]-[0027]. | 1-8 |
| Y | | 9-11 |
| Y | JP 2005-093236 A (TOYOTA MOTOR CORP.) 07 April 2005 (2005-04-07) See paragraph [0014]. | 9-11 |
| A | JP 2007-273390 A (DENSO CORP. et al.) 18 October 2007 (2007-10-18) See claims 1-5. | 1-11 |
| A | JP 2015-153539 A (NISSAN MOTOR CO., LTD.) 24 August 2015 (2015-08-24) See claims 1-5. | 1-11 |
| A | JP 2004-127799 A (PANASONIC HOLDINGS CORP.) 22 April 2004 (2004-04-22) See claims 1-6. | 1-11 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 November 2023** | **07 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/011263**

| Patent document cited in search report | | | Publication date (day/month/year) | Patent family member(s) | | | Publication date (day/month/year) |
|---|---|---|---|---|---|---|---|
| KR | 10-2021-0127011 | A | 21 October 2021 | None | | | |
| JP | 2005-093236 | A | 07 April 2005 | None | | | |
| JP | 2007-273390 | A | 18 October 2007 | JP | 4954585 | B2 | 20 June 2012 |
| JP | 2015-153539 | A | 24 August 2015 | JP | 6413254 | B2 | 31 October 2018 |
| JP | 2004-127799 | A | 22 April 2004 | JP | 4357825 | B2 | 04 November 2009 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120126303